# EUROPÄISCHE PATENTSCHRIFT

(11) **EP 2 654 027 B1**
(45) Veröffentlichungstag und Bekanntmachung des Hinweises auf die Patenterteilung: **29.08.2018**
(21) Anmeldenummer: 12164290.4
(22) Anmeldetag: 16.04.2012
(51) Int. Cl.: G08G 1/16, G08G 1/0962, G06K 9/00, G01C 21/36

(54) **Verfahren zum Ausgeben einer Warnung vor einem Überholvorgang**
Method for emitting a warning before an overtaking procedure
Procédé d'émission d'un avertissement avant un dépassement

(43) Veröffentlichungstag der Anmeldung: 23.10.2013
(73) Patentinhaber: Preh Car Connect GmbH, 01156 Dresden (DE)
(72) Erfinder: Kolanko, Jan, 01157 Dresden (DE)

(56) Entgegenhaltungen:
- EP-A1- 1 591 754
- EP-A1- 2 026 246
- WO-A1-2006/037360
- DE-A1-102009 031 480
- DE-A1-102009 045 476
- DE-A1-102011 103 603

## Beschreibung

Die Erfindung betrifft ein Verfahren und eine Warnvorrichtung zum Ausgeben einer Warnung vor einem Überholvorgang.

Im alltäglichen Straßenverkehr möchte jeder Verkehrsteilnehmer ein bestimmtes Fahrtziel auf die für ihn günstigste (optimale) Art und Weise erreichen. Beim Führen eines Fahrzeugs kommt es oft zu situationsabhängigen spontanen Entscheidungen eines Fahrzeugführers. So kann es beispielsweise vorkommen, dass der Fahrzeugführer entscheidet, das Fahrzeug abzubremsen, da eine Ampel von Grün auf Gelb wechselt. Oder der Fahrzeugführer entscheidet, das Fahrzeug zu beschleunigen, weil eine Grünphase einer Ampel zu Ende geht. Oder der Fahrzeugführer entscheidet sich zum Überholen eines Fahrzeugs, das für sein Empfinden zu langsam fährt.

Viele der Entscheidungen eines Fahrzeugführers basieren auf einer mehr oder weniger guten Voraussicht, die beispielsweise das rechtzeitige Einordnen in einen bestimmten Fahrstreifen oder die Gefährdung des Fahrzeugführers und anderer Verkehrsteilnehmer betrifft. Insbesondere basieren viele der Entscheidungen des Fahrzeugführers auf subjektiven Annahmen oder Wahrnehmungen. Das liegt daran, dass der Fahrzeugführer die Konsequenzen vieler Fahrmanöver nicht exakt vorhersehen (vorausberechnen) kann. Deshalb besteht ein Bedarf nach technischen Systemen, mit denen sich Gefahrensituationen im Straßenverkehr vermeiden lassen.

Eine Gefahrensituation kann insbesondere dann entstehen, wenn ein Fahrzeug kurz vor einer Abzweigung, beispielsweise in Form einer Autobahnausfahrt oder einer Einfahrt in eine Querstraße, in die der Fahrzeugführer des Fahrzeugs einfahren beziehungsweise einbiegen möchte, ein anderes Fahrzeug überholt. Schätzt der Fahrzeugführer die bis zu der Abzweigung verbleibende Fahrstrecke oder den benötigten Überholweg falsch ein, kann das dazu führen, dass sein Fahrzeug nicht oder nicht sicher in die Abzweigung einfahren kann, weil das Fahrzeug nach dem Überholvorgang nicht rechtzeitig in den richtigen Fahrstreifen einschert oder nicht rechtzeitig vor der Abzweigung abgebremst wird.

Eine solche Gefahrensituation kann auch dann entstehen, wenn ein Fahrzeugführer zu Beginn eines Überholvorgangs die Entfernung zu einer zu benutzenden Autobahnausfahrt noch nicht kennt. Das ist möglich, wenn der Fahrzeugführer durch die Zielführung einer Navigationseinrichtung geleitet wird. Es kann vorkommen, dass die Autobahnausfahrt zu Beginn des Überholvorgangs noch nicht durch die Zielführung angekündigt wurde oder der Fahrzeugführer eine Ankündigung der Autobahnausfahrt wegen einer Stresssituation nicht wahrgenommen hat. Druckschrift DE 10 2009 045 476 A1 beschreibt eine Warnvorrichtung für einen Fahrer eines Kraftfahrzeugs zum Warnen vor einem unsicheren Überholvorgang, wobei eine erste Länge eines für den Überholvorgang zur Verfügung stehenden Streckenabschnitts vor einer Abzweigung sowie eine zweite Länge eines für den Überholvorgang erforderlichen Streckenabschnitts bestimmt werden und eine Warnung an den Fahrer ausgegeben wird, falls die erste Länge kleiner als die zweite Länge ist.

Somit stellt sich die Aufgabe, ein Verfahren bereitzustellen, mit dem die geschilderte Gefahrensituation vermieden werden kann.

Die Aufgabe wird mit dem erfindungsgemäßen Verfahren zum Ausgeben einer Warnung vor einem Überholvorgang an einen Fahrzeugführer eines Fahrzeugs gemäß Anspruch 1 gelöst. Das vorgestellte Verfahren kommt insbesondere vor dem Abbiegen in eine Quer- oder Seitenstraße oder vor dem Abfahren von einer mehrstreifigen Richtungsfahrbahn zum Einsatz. Bei dem Verfahren wird zunächst festgestellt, ob eine Überholabsicht des Fahrzeugführers besteht. Die weiteren Verfahrensschritte werden nur dann ausgeführt, wenn eine solche Überholabsicht besteht. Dann werden eine erste Streckenlänge zwischen dem ersten Fahrzeug und der Abzweigung und eine zweite Streckenlänge, welche für den Überholvorgang und ein sicheres Einfahren in die Abzweigung benötigt wird, bestimmt. Beide Streckenlängen werden miteinander verglichen. Wenn die erste Streckenlänge kleiner als die zweite Streckenlänge ist, wird eine Warnung vor dem Überholvorgang an den Fahrzeugführer ausgegeben.

Aufgrund des beschriebenen Verfahrensablaufs können die Verfahrensschritte vollautomatisch ausgeführt werden, sodass die Warnung unabhängig von einer subjektiven Annahme oder Wahrnehmung des Fahrzeugführers ausgegeben wird. Das heißt, eine Fehleinschätzung des Fahrzeugführers bezüglich der Entfernung bis zur Abzweigung, bezüglich des benötigten Überholwegs oder bezüglich des zum Abbremsen nach dem Überholvorgang benötigten Wegs hat keinen Einfluss auf das Ausgeben der Warnung.

Die Warnung gibt dem Fahrzeugführer Gelegenheit, zu entscheiden, ob er den Überholvorgang fortsetzt oder nicht. Der Fahrzeugführer wird somit vor gefährlichen Aktionen gewarnt, beispielsweise vor einem Unterschreiten eines Sicherheitsabstands oder einem riskanten Bremsmanöver, die notwendig werden könnten, um trotz des Überholvorgangs einer Route zu folgen. Somit kann die oben geschilderte Gefahrensituation sicher vermieden werden.

Neben dem erfindungsgemäßen Verfahren wird auch eine erfindungsgemäße Warneinrichtung zum Ausgeben einer Warnung vor einem Überholvorgang an den Fahrzeugführer eines Fahrzeugs gemäß Anspruch 14 bereitgestellt.

Weitere Ausführungsformen der Erfindung sind in den abhängigen Patentansprüchen beschrieben.

Die Erfindung wird bezugnehmend auf die folgenden Figuren näher erläutert:
Figur 1 zeigt ein Blockschaltbild einer Warneinrichtung gemäß einer Ausführungsform der Erfindung.

Die Figuren 2 bis 5 zeigen jeweils eine Draufsicht auf einen Autobahnabschnitt zum Erläutern einer Ausführungsform oder eines veranschaulichenden Beispiels des erfindungsgemäßen Verfahrens.

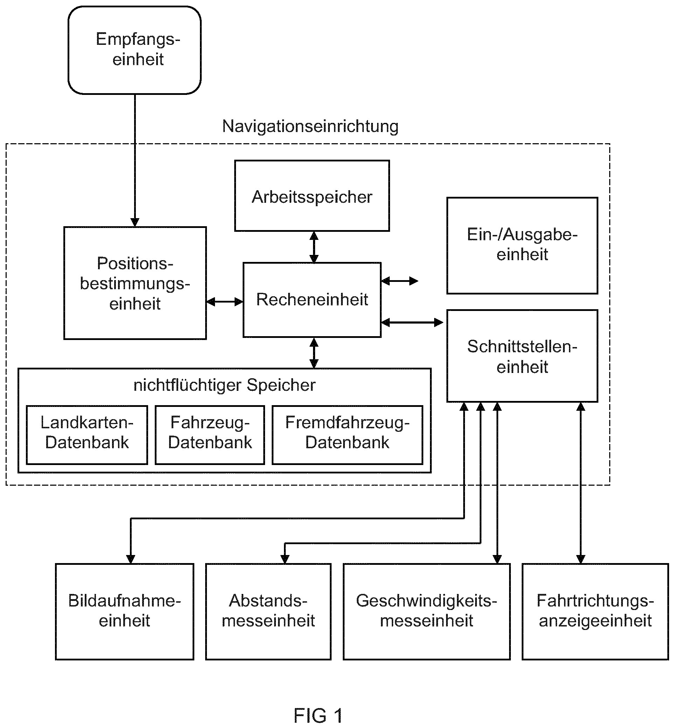

**Figur 1** zeigt ein Blockschaltbild einer Warneinrichtung gemäß einer Ausführungsform der Erfindung.

Die Warneinrichtung weist mehrere in einem Fahrzeug angeordnete Funktionsmodule auf, welche jeweils als Rechteck dargestellt sind. Neben den in Figur 1 gezeigten Funktionsmodulen kann die Warneinrichtung noch weitere Funktionsmodule aufweisen.

Jedes der Funktionsmodule kann mittels eines separaten integrierten Schaltkreises oder mittels mehrerer integrierter Schaltkreise, die elektrisch miteinander verbunden sind, realisiert sein. Alternativ dazu können auch mehrere der Funktionsmodule mittels eines gemeinsamen integrierten Schaltkreises realisiert sein. Des Weiteren können eines oder mehrere der Funktionsmodule als Softwaremodule vorliegen, die von einem Prozessor ausführbar sind.

Einige der Funktionsmodule, nämlich die Recheneinheit, der Arbeitsspeicher, der nichtflüchtige Speicher, die Positionsbestimmungseinheit, die Empfangseinheit, die Ein-/Ausgabeeinheit und die Schnittstelleneinheit, sind Bestandteile einer Navigationseinrichtung. Diese Funktionsmodule übernehmen sowohl Aufgaben bei der Fahrzeugnavigation als auch Aufgaben beim Ausführen des erfindungsgemäßen Verfahrens. Bei der Navigationseinrichtung handelt es sich um eine fest in dem Fahrzeug eingebaute Navigationseinrichtung. Alternativ dazu kann auch eine tragbare Navigationseinrichtung vorliegen, welche über eine Datenverbindung mit dem Fahrzeug kommuniziert.

Bei einer anderen Ausführungsform der Erfindung sind eines oder mehrere der im vorherigen Abschnitt aufgeführten Funktionsmodule, beispielsweise die Recheneinheit, der Arbeitsspeicher oder die Ausgabeeinheit, Bestandteile eines anderen bekannten Fahrzeugsubsystems, beispielsweise eines Bordcomputers. Daneben ist es aber auch möglich, dass eines oder mehrere der im vorherigen Abschnitt aufgeführten Funktionsmodule ausschließlich zum Ausführen des erfindungsgemäßen Verfahrens dienen, also keine andere Aufgabe erfüllen.

Die Recheneinheit ist als zentraler Bestandteil der Warneinrichtung in Form eines Mikroprozessors ausgebildet, steuert den Ablauf des erfindungsgemäßen Verfahrens und erledigt verschiedene Berechnungs- und Auswerteaufgaben, die noch erläutert werden.

Ferner verfügt die Warneinrichtung über eine mit der Recheneinheit verbundene Positionsbestimmungseinheit in Form eines GPS-Empfängers, der mit einer Empfangseinheit in Form einer GPS-Antenne ausgestattet ist. Die Positionsbestimmungseinheit gewinnt aus Satellitensignalen, die von der Empfangseinheit empfangen werden, Positionskoordinaten und übermittelt diese an die Recheneinheit, sodass die Recheneinheit aus den Positionskoordinaten eine geografische Position des Fahrzeugs berechnen kann.

Bei einer anderen Ausführungsform der Erfindung wird anstelle des GPS-Empfängers eine andere Art von Positionsbestimmungseinheit verwendet, beispielsweise ein GALILEO-Empfänger oder ein GLONASS-Empfänger, der mit einer passenden Antenne ausgestattet ist.

Die Recheneinheit ist mit einem Arbeitsspeicher gekoppelt, der zum zwischenzeitlichen Speichern von Softwareprogrammen, Variablen und Zwischenergebnissen dient.

Zusätzlich ist die Recheneinheit mit einem nichtflüchtigen Speicher gekoppelt, welcher beispielsweise als EEPROM oder Festplattenlaufwerk ausgebildet ist. Der nichtflüchtige Speicher weist eine Landkartendatenbank, eine Fahrzeugdatenbank und eine Fremdfahrzeugdatenbank auf. Außerdem ist in dem nichtflüchtigen Speicher eine Bilderkennungssoftware gespeichert, die bei Bedarf zum Ausführen in den Arbeitsspeicher übertragen werden kann.

Die Landkartendatenbank enthält eine Vielzahl von Landkartendaten, welche geografische Objekte und diesen zugeordnete Informationen repräsentieren, beispielsweise Straßen, Wege, Plätze, Eisenbahnlinien, Flüsse, Gebäude, Brücken, Geländeformen, Landesgrenzen, Parkmöglichkeiten, Raststätten, Verkehrsregelungen, Ortschaften und Geschwindigkeitsbegrenzungen.

Die Fahrzeugdatenbank enthält Fahrzeugdaten, welche die Höchstgeschwindigkeit, die Beschleunigungsfähigkeit, die Verzögerungsfähigkeit und die Länge des Fahrzeugs repräsentieren. Optional können auch andere Fahrzeugeigenschaften, beispielsweise das Gewicht oder die Reifenluftdrücke des Fahrzeugs, von den Fahrzeugdaten repräsentiert werden. Die Fahrzeugdaten können bereits bei der Herstellung des Fahrzeugs in den nichtflüchtigen Speicher gespeichert worden sein oder zu einem späteren Zeitpunkt manuell oder über eine Datenverbindung in den nichtflüchtigen Speicher übertragen worden sein.

Bei einer anderen Ausführungsform der Erfindung weist die Fahrzeugdatenbank mehrere Geschwindigkeitsbereiche auf, denen jeweils ein Standardüberholweg zugeordnet ist. Bei solch einem Standardüberholweg handelt es sich um eine Streckenlänge, welche das Fahrzeug typischerweise für einen Überholvorgang und das sichere Einfahren in eine Abzweigung benötigt, wenn die Geschwindigkeit des Fahrzeugs zu Beginn des Überholvorgangs innerhalb des jeweiligen Geschwindigkeitsbereichs liegt. Beispielsweise beträgt der dem Geschwindigkeitsbereich 120 km/h bis 130 km/h zugeordnete Standardüberholweg 480 m. Die in der Fahrzeugdatenbank enthaltenen Geschwindigkeitsbereiche und Standardüberholwege können bereits bei der Herstellung des Fahrzeugs in den nichtflüchtigen Speicher gespeichert worden sein. Alternativ dazu können diese Daten zu einem späteren Zeitpunkt manuell oder über eine Datenverbindung in den nichtflüchtigen Speicher übertragen worden sein. Es ist aber auch möglich, dass diese Daten beim Betrieb des Fahrzeugs dynamisch aktualisiert werden.

Bei einer weiteren Ausführungsform der Erfindung weist die Fahrzeugdatenbank Informationen zur Fahrweise des Fahrzeugs beziehungsweise des Fahrzeugführers auf, welche während des Betriebs des Fahrzeugs dynamisch aktualisiert werden. Die Informationen liegen beispielsweise in Form eines Geschwindigkeitsprofils vor, das Daten typischer Beschleunigungs- oder Bremsvorgänge für unterschiedliche Straßenklassen (Autobahn, Bundesstraße, Landstraße, Ortsstraße etc.) oder erlaubte Höchstgeschwindigkeiten aufweist, wobei die Daten jeweils einer bestimmten Straßenklasse beziehungsweise erlaubten Höchstgeschwindigkeit zugeordnet sind. Solch ein Geschwindigkeitsprofil enthält beispielsweise die Information, dass das Fahrzeug auf einer Autobahn oder bei einer erlaubten Höchstgeschwindigkeit von 130 km/h in 5 Sekunden von 0 km/h auf 50 km/h beschleunigt wird, in 7 Sekunden von 50 km/h auf 100 km/h beschleunigt wird und in 10 Sekunden von 100 km/h auf 130 km/h beschleunigt wird, und die Endgeschwindigkeit des Fahrzeugs 140 km/h beträgt.

Die Fremdfahrzeugdatenbank enthält mehrere Referenzfahrzeugkonturen, denen jeweils eine Standardfahrzeuglänge zugeordnet ist. Jede der Referenzfahrzeugkonturen gehört zu einem bestimmten Fahrzeugtyp, beispielsweise einem PKW, einem Transporter oder einem LKW, und stellt einen stilisierten Umriss einer Heckansicht des Fahrzeugtyps dar. Bei der zugeordneten Standardfahrzeuglänge handelt es sich um eine typische Länge eines Fahrzeugs des Fahrzeugtyps. Die in der Fremdfahrzeugdatenbank enthaltenen Referenzfahrzeugkonturen und Standardfahrzeuglängen können bereits bei der Herstellung des Fahrzeugs in den nichtflüchtigen Speicher gespeichert worden sein oder zu einem späteren Zeitpunkt manuell oder über eine Datenverbindung in den nichtflüchtigen Speicher übertragen worden sein.

Optional weist der nichtflüchtige Speicher zusätzlich zu der Landkartendatenbank, der Fahrzeugdatenbank und der Fremdfahrzeugdatenbank eine Routendatenbank auf, in welcher während der Fahrt bevorzugte Routen oder Straßen gespeichert werden. Dazu werden beispielsweise Straßen, die von dem Fahrzeug an einem bestimmten Wochentag oder zu einer bestimmten Uhrzeit häufig befahren werden, als zu dieser Zeit bevorzugt markiert. Zusätzlich können auch die Geschwindigkeiten oder Durchschnittsgeschwindigkeiten, mit denen das Fahrzeug diese Straßen befährt, in der Routendatenbank gespeichert werden. Insbesondere kann ein Vergleich der genannten Geschwindigkeiten beziehungsweise Durchschnittsgeschwindigkeiten mit Geschwindigkeitswerten vorgenommen werden, die Bestandteil der Landkartendaten sind. Auf diese Weise wird festgestellt, ob das Befahren bestimmter Straßen zu bestimmten Zeiten günstiger ist als in den Kartendaten angegeben.

Des Weiteren ist die Recheneinheit mit einer Ein-/Ausgabeeinheit gekoppelt, die einen Berührungsbildschirm (Touchscreen) und einen Lautsprecher aufweist. Die Ein-/Ausgabeeinheit dient unter anderem zum Eingeben eines Ziels in die Navigationseinrichtung und zum Ausgeben einer Warnung vor einem Überholvorgang an den Fahrzeugführer. Eine derartige Warnung kann in visueller Form, als auffällige Grafik auf dem Berührungsbildschirm, oder in akustischer Form, als Warnton oder Sprachansage, über den Lautsprecher ausgegeben werden.

Außerdem ist die Recheneinheit über eine Schnittstelleneinheit mit einer Bildaufnahmeeinheit, einer Abstandsmesseinheit, einer Geschwindigkeitsmesseinheit und einer Fahrtrichtungsanzeigeeinheit verbunden. Wie in Figur 1 gezeigt, ist jedes dieser Funktionsmodule über eine separate Datenverbindung mit der Schnittstelleneinheit gekoppelt. Alternativ dazu können aber auch mehrere dieser Funktionsmodule über eine gemeinsam genutzte Busverbindung mit der Schnittstelleneinheit gekoppelt sein.

Bei der Bildaufnahmeeinheit handelt es sich um eine Digitalkamera, welche mit einem Bildsensor, beispielsweise einem CCD-Bildsensor oder einem CMOS-Bildsensor, ausgestattet ist. Die Bildaufnahmeeinheit kann Bestandteil eines Fahrerassistenzsystems des Fahrzeugs sein, beispielsweise eines Verkehrszeichenerkennungsassistenten, eines Spurhalteassistenten oder eines Notbremsassistenten. Alternativ dazu kann die Bildaufnahmeeinheit Bestandteil der Navigationseinrichtung sein und zum Darstellen realer Straßenszenen auf dem Berührungsbildschirm dienen. Es ist aber auch möglich, dass die Bildaufnahmeeinheit ausschließlich der erfindungsgemäßen Warneinrichtung angehört.

Die Bildaufnahmeeinheit ist in dem Fahrzeug derart angeordnet und ausgerichtet, dass mittels der Bildaufnahmeeinheit Bilder von einem vor dem Fahrzeug liegenden Fahrbahnbereich aufgenommen werden können, wobei auf oder neben der Fahrbahn befindliche Fahrbahnmarkierungen und Objekte erfasst werden. Hierfür ist die Bildaufnahmeeinheit hinter der Frontscheibe, in einem Rückspiegel, auf dem Fahrzeugdach, an der Front oder an einer anderen geeigneten Stelle des Fahrzeugs angebracht. Die aufgenommenen Bilder können in einem geeigneten Bilddatenformat, beispielsweise JPEG, TIFF, GIF oder BITMAP, zur Recheneinheit übertragen und dann mittels der Recheneinheit ausgewertet werden. Dazu verwendet die Recheneinheit die in dem nichtflüchtigen Speicher gespeicherte Bilderkennungssoftware.

Die Bildaufnahmeeinheit stellt permanent Bilder bereit, die automatisch an die Recheneinheit übertragen oder bei Bedarf durch die Recheneinheit abgerufen werden. Alternativ dazu kann die Bildaufnahmeeinheit von der Recheneinheit derart gesteuert werden, dass die Bildaufnahmeeinheit erst beim Erhalt eines speziellen Steuersignals von der Recheneinheit ein Bild oder mehrere Bilder aufnimmt und an die Recheneinheit überträgt.

Die Abstandsmesseinheit ist zum Erfassen eines Abstands zwischen dem Fahrzeug und einem vor dem Fahrzeug befindlichen anderen Fahrzeug eingerichtet. Dazu ist die Abstandsmesseinheit beispielsweise mit einem Radarsensor, einem Lasersensor, einem Ultraschallsensor, einem Bildsensor oder mit mehreren der genannten Sensoren ausgestattet. Daneben erfasst die Abstandsmesseinheit auch die Richtung, in welcher das andere Fahrzeug vor dem Fahrzeug angeordnet ist, beispielsweise als Winkel, den die Richtung mit einer Fahrzeuglängsachse bildet. Zu diesem Zweck ist die Abstandsmesseinheit mit einem Rundsichtradarsystem, einem Lidarsensorsystem, einem Ultraschallsensorsystem, einem 3D-Kamerasystem oder mit mehreren der genannten Systeme ausgestattet. Insbesondere ist die Abstandsmesseinheit zum Erfassen der Abstände und Richtungen mehrerer vor dem Fahrzeug befindlicher Fahrzeuge eingerichtet, sodass mithilfe der Recheneinheit ein Abstandsprofil dieser Objekte erstellt werden kann.

Die Abstandsmesseinheit stellt permanent Abstandswerte bereit, die automatisch an die Recheneinheit übertragen oder bei Bedarf durch die Recheneinheit abgerufen werden. Alternativ dazu wird die Abstandsmesseinheit von der Recheneinheit derart gesteuert, dass die Abstandsmesseinheit erst beim Erhalt eines speziellen Steuersignals von der Recheneinheit eine Abstandsmessung oder mehrere Abstandsmessungen vornimmt und die gemessenen Abstandswerte an die Recheneinheit überträgt.

Die Abstandsmesseinheit kann Bestandteil eines Fahrerassistenzsystems des Fahrzeugs sein, beispielsweise eines Notbremsassistenten oder eines Abstandsregeltempomaten. Es ist aber auch möglich, dass die Abstandsmesseinheit ausschließlich der erfindungsgemäßen Warneinrichtung angehört.

Bei der Geschwindigkeitsmesseinheit, welche zum Messen einer Geschwindigkeit des Fahrzeugs dient, handelt es sich um einen Tachometer. Die Geschwindigkeitsmesseinheit stellt permanent Geschwindigkeitswerte bereit, die automatisch an die Recheneinheit übertragen oder bei Bedarf von der Recheneinheit abgerufen werden.

Bei einer anderen Ausführungsform der Erfindung werden Geschwindigkeitswerte bereitgestellt, indem zu unterschiedlichen Zeitpunkten von der Positionsbestimmungseinheit gelieferte Positionskoordinaten erfasst und mittels der Recheneinheit ausgewertet werden.

Bei der Fahrtrichtungsanzeigeeinheit handelt es sich um eine Blinkanlage. Die Fahrtrichtungsanzeigeeinheit stellt permanent Informationen zum Aktivierungszustand eines oder mehrerer Fahrtrichtungsanzeiger (Blinker) bereit, die zum Ankündigen eines Überholvorgangs dienen. Die Informationen werden automatisch an die Recheneinheit übertragen oder bei Bedarf durch die Recheneinheit abgerufen. Da das Fahrzeug im Rechtsverkehr betrieben wird, handelt es sich bei den Fahrtrichtungsanzeigern um an der linken Längsseite des Fahrzeugs angebrachte Fahrtrichtungsanzeiger. Würde das Fahrzeug dagegen im Linksverkehr betrieben, würde es sich bei den Fahrtrichtungsanzeigern um an der rechten Längsseite des Fahrzeugs angebrachte Fahrtrichtungsanzeiger handeln.

Optional kann die Recheneinheit über die Schnittstelleneinheit mit weiteren Fahrzeugsubsystemen gekoppelt sein, beispielsweise mit der Motorsteuerung oder mit der Bremsen- und Fahrwerksteuerung des Fahrzeugs, sodass Daten oder Informationen von diesen Fahrzeugsubsystemen an die Recheneinheit übertragen werden können.

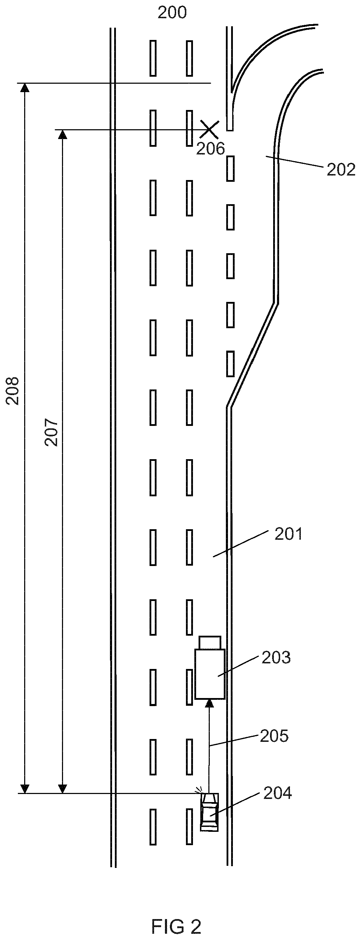

**Figur 2** zeigt eine Draufsicht auf einen Autobahnabschnitt 200 zum Erläutern eines veranschaulichenden Beispiels des Verfahrens, wobei auch auf Figur 1 Bezug genommen wird.

Der Autobahnabschnitt 200 weist eine dreistreifige Richtungsfahrbahn 201 mit einer Autobahnausfahrt 202 auf. Eine ebenfalls vorhandene entgegengesetzte Richtungsfahrbahn ist in Figur 2 nicht dargestellt. Der rechte Fahrstreifen der Richtungsfahrbahn 201 wird von einem LKW 203 befahren, dem ein PKW 204 auf demselben Fahrstreifen folgt. Der PKW 204 ist mit der in Figur 1 gezeigten Warneinrichtung ausgestattet.

Wie oben dargelegt, gehören einige Bestandteile der Warneinrichtung zu einer Navigationseinrichtung. Die Zielführung der Navigationseinrichtung ist aktiviert, sodass der Fahrzeugführer des PKWs 204 mittels optischer und akustischer Fahranweisungen entlang einer Route geleitet wird, die über die Autobahnausfahrt 202 führt. Daher soll der PKW 204 die Richtungsfahrbahn 201 über die Ausfahrt 202 verlassen.

Bei einem ersten Verfahrensschritt wird geprüft, ob eine Absicht des Fahrzeugführers des PKWs 204 besteht, einen Überholvorgang auszuführen.

Hierfür wird von der Recheneinheit ein aktuelles Bild des vor dem PKW 204 liegenden Abschnitts der Richtungsfahrbahn 201 von der Bildaufnahmeeinheit abgerufen. Das erhaltene Bild wird mittels der Recheneinheit unter Verwendung der Bilderkennungssoftware ausgewertet, sodass auf dem Bild gezeigte Objekte, insbesondere Fahrbahnmarkierungen und vorausfahrende Fahrzeuge, als solche identifiziert werden. Dabei wird festgestellt, dass dem PKW 204 auf dem vom PKW 204 befahrenen Fahrstreifen ein anderes Fahrzeug vorausfährt, wobei es sich um den LKW 203 handelt.

Das beschriebene Abrufen und Auswerten eines Bildes des vor dem PKW 204 liegenden Abschnitts der Richtungsfahrbahn 201 kann permanent ausgeführt werden. Beispielsweise werden derartige Bilder in regelmäßigen zeitlichen Abständen abgerufen und ausgewertet.

Ferner wird durch die Recheneinheit ein aktueller Abstand 205 zwischen dem PKW 204 und dem vorausfahrenden Fahrzeug von der Abstandsmesseinheit abgerufen. Der erhaltene Abstandswert wird mittels der Recheneinheit mit einem vorgegebenen Referenzabstand verglichen, welcher beispielsweise 20 m, 30 m, 40 m, 50 m oder 60 m beträgt. Bei dem Vergleich wird festgestellt, dass der Abstandswert kleiner als der Referenzabstand ist.

Das beschriebene Abrufen und Vergleichen eines Abstandswerts kann permanent ausgeführt werden, wenn ein dem PKW 204 vorausfahrendes Fahrzeug identifiziert wurde. Beispielsweise werden Abstandswerte in regelmäßigen zeitlichen Abständen abgerufen und jeweils mit einem Referenzabstand verglichen.

Durch das permanente Auswerten von Bildern des vor dem PKW 204 liegenden Abschnitts der Richtungsfahrbahn in Verbindung mit dem permanenten Abrufen und Vergleichen von Abstandswerten kann ein vorausfahrendes Fahrzeug permanent verfolgt werden, was auch als "tracking" bezeichnet wird.

Da auf dem vom PKW 204 befahrenen Fahrstreifen ein vorausfahrendes Fahrzeug festgestellt wurde, dessen Abstand den Referenzabstand unterschreitet, wird der Zustand eines Fahrtrichtungsanzeigers des PKWs 204, der zum Ankündigen eines Überholvorgangs dient, von der Fahrtrichtungsanzeigeeinheit abgerufen. Bei dem Fahrtrichtungsanzeiger handelt es sich um einen auf der linken Längsseite des PKWs 204 angeordneten Blinker. Im vorliegenden Fall wird festgestellt, dass der Blinker aktiviert ist.

Zusammenfassend wird festgestellt, dass dem PKW 204 auf demselben Fahrstreifen ein Fahrzeug in einem Abstand vorausfährt, der kleiner als der Referenzabstand ist, wobei ein zum Ankündigen eines Überholvorgangs vorgesehener Fahrtrichtungsanzeiger des PKWs 204 aktiviert ist. Daher wird angenommen, dass der Fahrzeugführer des PKWs 204 beabsichtigt, das vorausfahrende Fahrzeug zu überholen. Wegen der Überholabsicht des Fahrzeugführers werden die folgenden Verfahrensschritte ausgeführt. Andernfalls würde das Verfahren an dieser Stelle abgebrochen, könnte aber später, beispielsweise nach einer vorgegebenen Zeitdauer, erneut gestartet werden.

Bei einem zweiten Verfahrensschritt wird mittels der Recheneinheit eine erste Streckenlänge 207 zwischen dem PKW 204 und einer Abzweigung 202, in die der PKW 204 voraussichtlich einfahren wird, bestimmt.

Dazu wird bei einem ersten Teilschritt mittels der Positionsbestimmungseinheit die geografische Position des PKWs 204 bestimmt.

Ferner wird bei einem zweiten Teilschritt die Autobahnausfahrt 202 ermittelt, welche der PKW 204 benutzen soll. Hierfür wird außer der im ersten Teilschritt ermittelten Position eine im Arbeitsspeicher vorliegende Route verwendet, welche auf der Basis eines Ziels berechnet wurde, das der Fahrzeugführer in die Navigationseinrichtung eingegeben hat.

Alternativ dazu, wenn keine Zielführung aktiv ist und der nichtflüchtige Speicher über die oben beschriebene Routendatenbank verfügt, kann die Route anhand der geografischen Position des Fahrzeugs und des aktuellen Wochentags oder der aktuellen Tageszeit aus der Routendatenbank ausgewählt werden. Beispielsweise ist am Montag um 7:30 Uhr die Route über die Autobahn zur Arbeitsstelle des Fahrzeugführers am wahrscheinlichsten. Auf diese Weise kann der Fahrzeugführer auch ohne aktivierte Zielführung von dem erfindungsgemäßen Verfahren profitieren.

Dann wird der Autobahnausfahrt 202 eine geografische Position 206 zugeordnet, die am Beginn der Kurve der Autobahnausfahrt 202 angeordnet ist. Abweichend davon kann die Position auch an einer anderen Stelle der Autobahnausfahrt 202 angeordnet sein, beispielsweise am Beginn oder an der Mitte der Autobahnausfahrt 202.

Weiterhin wird bei einem dritten Teilschritt mittels der Recheneinheit die Länge der Fahrstrecke zwischen der Position des PKWs 204 und der Position 206 der Autobahnausfahrt 202 unter Berücksichtigung des Verlaufs der Route ermittelt und als erste Streckenlänge 207 bereitgestellt.

Bei einem dritten Verfahrensschritt wird mittels der Recheneinheit eine zweite Streckenlänge 208 bestimmt, welche für den Überholvorgang und ein sicheres Einfahren des PKWs 204 in die Autobahnausfahrt 202 benötigt wird. Das heißt, der voraussichtliche Überholweg und der für das Abbremsen des PKWs 204 nach dem Überholvorgang voraussichtlich benötigte Weg werden vorausberechnet und zueinander addiert.

Hierfür werden bei einem ersten Teilschritt eine aktuelle Geschwindigkeit des PKWs 204, der aktuelle Abstand 205 zwischen dem PKW 204 und dem vorausfahrenden Fahrzeug und eine aktuelle Geschwindigkeit des vorausfahrenden Fahrzeugs bestimmt.

Im Einzelnen werden mittels der Recheneinheit ein Geschwindigkeitswert oder mehrere zeitbezogene Geschwindigkeitswerte des PKWs 204 von der Geschwindigkeitsmesseinheit abgerufen. Außerdem werden mehrere zeitbezogene Werte des Abstands zwischen dem PKW 204 und dem vorausfahrenden Fahrzeug (Abstandswerte) von der Abstandsmesseinheit abgerufen. Dann wird mittels der Recheneinheit aus dem Geschwindigkeitswert beziehungsweise den Geschwindigkeitswerten und den Abstandswerten die Geschwindigkeit des vorausfahrenden Fahrzeugs berechnet. Steht eine ausreichende Anzahl von Geschwindigkeitswerten und Abstandswerten zur Verfügung, kann daraus auch eine Beschleunigung des vorausfahrenden Fahrzeugs berechnet werden.

Alternativ dazu kann eine aktuelle Geschwindigkeit des vorausfahrenden Fahrzeugs zumindest näherungsweise dadurch bestimmt werden, dass mittels der Recheneinheit ein Geschwindigkeitswert oder mehrere zeitbezogene Geschwindigkeitswerte des PKWs 204 von der Geschwindigkeitsmesseinheit abgerufen werden und mehrere zeitbezogene Bilder des vorausfahrenden Fahrzeugs von der Bildaufnahmeeinheit abgerufen und unter Verwendung einer Bilderkennungssoftware ausgewertet werden, sodass Bildänderungsinformationen bereitgestellt werden. Die Geschwindigkeit des vorausfahrenden Fahrzeugs kann dann unter Berücksichtigung des Geschwindigkeitswerts beziehungsweise der Geschwindigkeitswerte und der Bildänderungsinformationen berechnet werden.

Weiterhin kann eine aktuelle Beschleunigung des vorausfahrenden Fahrzeugs alternativ zu der obigen Verfahrensweise zumindest näherungsweise dadurch bestimmt werden, dass mittels der Recheneinheit mehrere zeitbezogene Geschwindigkeitswerte des PKWs 204 von der Geschwindigkeitsmesseinheit abgerufen werden und mehrere zeitbezogene Bilder des vorausfahrenden Fahrzeugs von der Bildaufnahmeeinheit abgerufen und unter Verwendung einer Bilderkennungssoftware ausgewertet werden, sodass Bildänderungsinformationen bereitgestellt werden. Die Beschleunigung des vorausfahrenden Fahrzeugs kann dann unter Berücksichtigung der Geschwindigkeitswerte und der Bildänderungsinformationen berechnet werden.

Außerdem werden aus den Geschwindigkeits- und Abstandswerten, welche die Recheneinheit erhält, ein Geschwindigkeitswert und ein Abstandswert, beispielsweise der zuletzt gemessene Geschwindigkeitswert und der zuletzt gemessene Abstandswert, ausgewählt und als aktuelle Geschwindigkeit des PKWs 204 und als aktueller Abstand zwischen dem PKW 204 und dem vorausfahrenden Fahrzeug bereitgestellt.

Bei einem zweiten Teilschritt wird mittels der Recheneinheit die Fahrzeuglänge des vorausfahrenden Fahrzeugs geschätzt. Hierfür wird unter Verwendung der Bilderkennungssoftware eine Fahrzeugkontur des vorausfahrenden Fahrzeugs aus dem beim ersten Verfahrensschritt aufgenommenen Bild extrahiert. Anhand des beim ersten Teilschritt bereitgestellten Abstandswerts wird die Größe der Fahrzeugkontur normiert, sodass sie einem vorgegebenen Standardabstand entspricht. Dann wird die Ähnlichkeit der extrahierten Fahrzeugkontur mit den in der Fremdfahrzeugdatenbank abgelegten Referenzfahrzeugkonturen anhand von deren Gestalt und Größe bewertet. Besteht eine hinreichende Ähnlichkeit der extrahierten Fahrzeugkontur mit einer der in der Fremdfahrzeugdatenbank abgelegten Referenzfahrzeugkonturen, wird die der Referenzfahrzeugkontur zugeordnete Standardfahrzeuglänge als die geschätzte Fahrzeuglänge des vorausfahrenden Fahrzeugs bereitgestellt.

Bei einem dritten Teilschritt werden das Beschleunigungsvermögen, das Verzögerungsvermögen, die Höchstgeschwindigkeit und die Fahrzeuglänge des PKWs 204 aus der Fahrzeugdatenbank abgerufen.

Bei einem vierten Teilschritt werden die auf der Autobahnausfahrt 202 und auf dem Abschnitt der Richtungsfahrbahn 201 zwischen dem PKW 204 und der Autobahnausfahrt 202 geltenden Geschwindigkeitsbegrenzungen mittels der Recheneinheit aus den Landkartendaten der Landkartendatenbank extrahiert. Alternativ dazu kann eine solche Geschwindigkeitsbegrenzung auch mittels eines Verkehrszeichenerkennungsassistenten ermittelt werden.

Bei einem fünften Teilschritt wird die zweite Streckenlänge 208 unter Verwendung folgender Eingangsgrößen berechnet:
a) aktuelle Geschwindigkeit des PKWs 204 (bereitgestellt beim ersten Teilschritt),
b) aktueller Abstand zwischen dem PKW 204 und dem vorausfahrenden Fahrzeug (bereitgestellt beim ersten Teilschritt),
c) aktuelle Geschwindigkeit des vorausfahrenden Fahrzeugs (bereitgestellt beim ersten Teilschritt),
d) geschätzte Fahrzeuglänge des vorausfahrenden Fahrzeugs (bereitgestellt beim zweiten Teilschritt),
e) Geschwindigkeitsbegrenzungen auf der Autobahnausfahrt 202 und auf dem Abschnitt der Richtungsfahrbahn 201 zwischen dem PKW 204 und der Autobahnausfahrt 202 (bereitgestellt beim vierten Teilschritt), und
f) Beschleunigungsvermögen, Verzögerungsvermögen, Höchstgeschwindigkeit und Fahrzeuglänge des PKWs (bereitgestellt beim dritten Teilschritt).

Optional, wenn die Beschleunigung des vorausfahrenden Fahrzeugs ermittelt wurde, kann auch diese in die Berechnung der zweiten Streckenlänge 208 einfließen. Des Weiteren können beim Berechnen der zweiten Streckenlänge 208 Informationen zum Straßenverlauf der Autobahnausfahrt 202, beispielsweise der Kurvenradius der Autobahnausfahrt 202, einbezogen werden. Als weitere Option können in die Berechnung zusätzliche Fahrzeuginformationen einfließen, aus denen sich eine optimale Geschwindigkeit für das Befahren der Autobahnausfahrt 202 ableiten lässt, beispielsweise das Gewicht des PKWs 204 und die Luftdrücke der Reifen des PKWs 204.

Bei einem anderen veranschaulichenden Beispiel wird bei einem zusätzlichen Teilschritt unter Verwendung der Bildaufnahmeeinheit geprüft, ob ein Fahrtrichtungsanzeiger des vorausfahrenden Fahrzeugs aktiviert ist, welcher zum Ankündigen eines Überholvorgangs vorgesehen ist. Ergibt die Prüfung, dass solch ein Fahrtrichtungsanzeiger aktiviert ist, wird angenommen, dass sich ein weiteres Fahrzeug oder ein anderes Hindernis vor dem vorausfahrenden Fahrzeug befindet, wodurch sich der benötigte Überholweg verlängert. Aufgrund dessen wird eine entsprechende Verlängerung der zweiten Streckenlänge angenommen.

Bei einem vierten Verfahrensschritt werden mittels der Recheneinheit die erste Streckenlänge 207 und die zweite Streckenlänge 208 miteinander verglichen. Im vorliegenden Fall ergibt der Vergleich, dass die erste Streckenlänge 207 kleiner als die zweite Streckenlänge 208 ist. Deshalb wird bei einem fünften Verfahrensschritt eine Warnung vor dem Überholvorgang an den Fahrzeugführer des Fahrzeugs ausgegeben. Dazu wird ein spezielles grafisches Symbol auf dem Berührungsbildschirm der Ein-/Ausgabeeinheit eingeblendet. Parallel dazu werden ein auffälliger Warnton und ein Sprachsignal über den Lautsprecher der Ein-/Ausgabeeinheit ausgegeben. Das Sprachsignal lautet beispielsweise: "Achtung, Überholvorgang gefährdet Abbiegemanöver" oder "Vorsicht, die Autobahn soll verlassen werden".

Wenn dagegen der Vergleich der ersten Streckenlänge mit der zweiten Streckenlänge zu dem Ergebnis führte, dass die erste Streckenlänge größer als die zweite Streckenlänge ist, würde keine Warnung vor dem Überholvorgang ausgegeben.

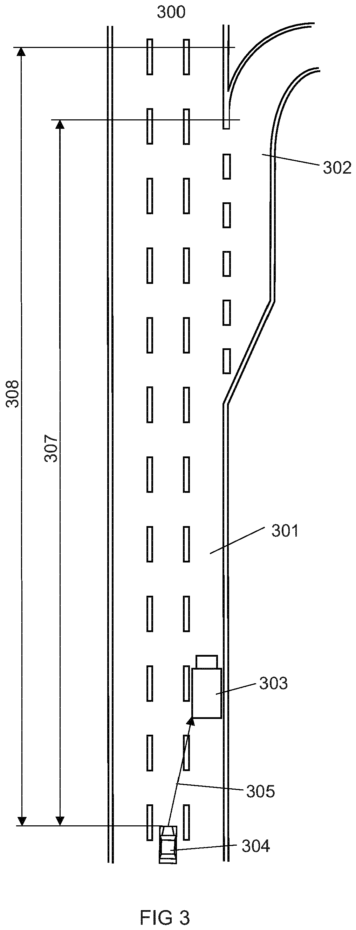

**Figur 3** zeigt eine Draufsicht auf einen Autobahnabschnitt 300 zum Erläutern einer Ausführungsform des erfindungsgemäßen Verfahrens, wobei auch auf Figur 1 Bezug genommen wird.

Der Autobahnabschnitt 300 weist eine dreistreifige Richtungsfahrbahn 301 mit einer Ausfahrt 302 auf. Der rechte Fahrstreifen der Richtungsfahrbahn 301 wird von einem LKW 303 befahren, dem ein PKW 304 auf dem mittleren Fahrstreifen folgt. Der PKW 304 ist mit der in Figur 1 gezeigten Warneinrichtung ausgestattet.

Wie oben dargelegt, gehören einige Bestandteile der Warneinrichtung zu einer Navigationseinrichtung. Die Zielführung der Navigationseinrichtung ist aktiviert, sodass der Fahrzeugführer des PKWs 304 mittels optischer und akustischer Fahranweisungen entlang einer Route geleitet wird, die über die Autobahnausfahrt 302 führt.

Bei einem ersten Verfahrensschritt wird geprüft, ob eine Absicht des Fahrzeugführers des PKWs 304 besteht, einen Überholvorgang auszuführen.

Hierfür wird mittels der Recheneinheit ein aktuelles Bild des vor dem PKW 304 liegenden Abschnitts der Richtungsfahrbahn von der Bildaufnahmeeinheit abgerufen. Das erhaltene Bild wird mittels der Recheneinheit unter Verwendung der Bilderkennungssoftware ausgewertet, sodass auf dem Bild gezeigte Objekte, insbesondere Fahrbahnmarkierungen und vorausfahrende Fahrzeuge, als solche identifiziert werden. Dadurch wird festgestellt, dass dem PKW 304 in einem Fahrstreifen, der zwischen dem von dem Fahrzeug befahrenen Fahrstreifen und einer möglichen Abzweigung angeordnet ist, ein anderes Fahrzeug vorausfährt, wobei es sich um den LKW 303 handelt.

Ferner wird von der Recheneinheit ein aktueller Abstand 305 zwischen dem PKW 304 und dem vorausfahrenden Fahrzeug von der Abstandsmesseinheit abgerufen. Der erhaltene Abstandswert wird mittels der Recheneinheit mit einem vorgegebenen Referenzabstand verglichen, wobei festgestellt wird, dass der Abstandswert kleiner als der Referenzabstand ist. Zusammenfassend wird festgestellt, dass dem PKW 304 auf einem Fahrstreifen, der zwischen dem von dem PKW 304 befahrenen Fahrstreifen und einer möglichen Abzweigung angeordnet ist, ein Fahrzeug in einem Abstand vorausfährt, der kleiner als der Referenzabstand ist. Daher wird angenommen, dass der Fahrzeugführer des PKWs 304 beabsichtigt, das vorausfahrende Fahrzeug zu überholen. Wegen der Überholabsicht des Fahrzeugführers werden die folgenden Verfahrensschritte ausgeführt. Andernfalls würde das Verfahren an dieser Stelle abgebrochen, könnte aber später, beispielsweise nach einer vorgegebenen Zeitdauer, erneut gestartet werden.

Bei einem zweiten Verfahrensschritt wird mittels der Recheneinheit eine erste Streckenlänge 307 zwischen dem PKW 304 und der Abzweigung 302, in die der PKW 304 voraussichtlich einfahren wird, bestimmt. Dabei wird in der gleichen Weise wie bei der Bestimmung der Streckenlänge 207 vorgegangen, die bezugnehmend auf Figur 2 beschrieben wurde.

Bei einem dritten Verfahrensschritt wird mittels der Recheneinheit eine zweite Streckenlänge 308 bestimmt, welche für den Überholvorgang und ein sicheres Einfahren des PKWs 304 in die Autobahnausfahrt 302 benötigt wird. Dabei wird in der gleichen Weise wie bei der Bestimmung der Streckenlänge 208 vorgegangen, die bezugnehmend auf Figur 2 beschrieben wurde.

Bei einem vierten Verfahrensschritt werden mittels der Recheneinheit die erste Streckenlänge 307 und die zweite Streckenlänge 308 miteinander verglichen. Der Vergleich ergibt, dass die erste Streckenlänge 307 kleiner als die zweite Streckenlänge 308 ist.

Deshalb wird bei einem fünften Verfahrensschritt eine Warnung vor dem Überholvorgang an den Fahrzeugführer des Fahrzeugs ausgegeben. Hierbei wird in der gleichen Weise wie beim Ausgeben der Warnung verfahren, das bezugnehmend auf Figur 2 beschrieben wurde.

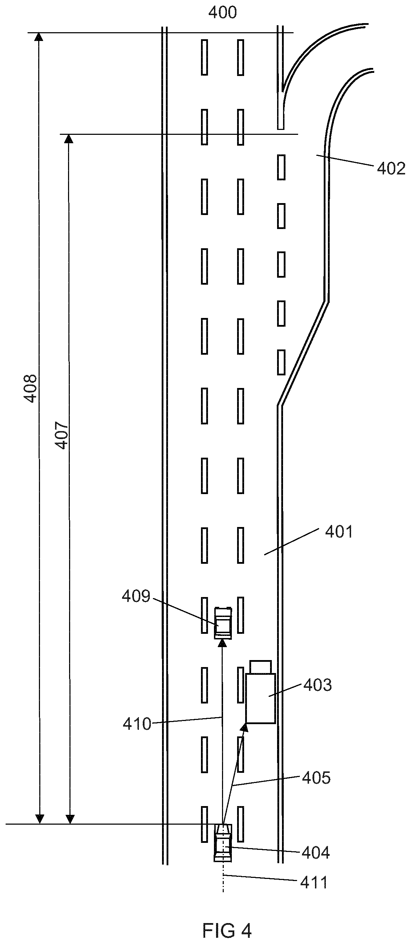

**Figur 4** zeigt eine Draufsicht auf einen Autobahnabschnitt 400 zum Erläutern einer weiteren Ausführungsform des erfindungsgemäßen Verfahrens, wobei auch auf Figur 1 Bezug genommen wird.

Der Autobahnabschnitt 400 weist eine dreistreifige Richtungsfahrbahn 401 mit einer Ausfahrt 402 auf. Der rechte Fahrstreifen der Richtungsfahrbahn 401 wird von einem LKW 403 befahren, dem ein PKW 404 auf dem mittleren Fahrstreifen folgt. Außerdem ist ein weiterer PKW 409 gezeigt, der dem PKW 404 auf demselben Fahrstreifen vorausfährt.

Der PKW 404 ist mit der in Figur 1 gezeigten Warneinrichtung ausgestattet. In der Fahrzeugdatenbank der Warneinrichtung ist ein fahrzeugspezifisches Geschwindigkeitsprofil gespeichert, das Daten typischer Beschleunigungs- oder Bremsvorgänge repräsentiert, die jeweils einer bestimmten Straßenklasse zugeordnet sind.

Wie oben dargelegt, gehören einige Bestandteile der Warneinrichtung zu einer Navigationseinrichtung. Die Zielführung der Navigationseinrichtung ist aktiviert, sodass der Fahrzeugführer des PKWs 404 mittels optischer und akustischer Fahranweisungen entlang einer Route geleitet wird, die unter anderem über die Autobahnausfahrt 402 führt.

Bei einem ersten Verfahrensschritt wird geprüft, ob eine Absicht des Fahrzeugführers des PKWs 404 besteht, einen Überholvorgang auszuführen.

Hierfür wird mittels der Recheneinheit ein aktuelles Bild des vor dem PKW 404 liegenden Abschnitts der Richtungsfahrbahn von der Bildaufnahmeeinheit abgerufen. Das erhaltene Bild wird mittels der Recheneinheit unter Verwendung der Bilderkennungssoftware ausgewertet, sodass auf dem Bild gezeigte Objekte, insbesondere Fahrbahnmarkierungen und vorausfahrende Fahrzeuge, als solche identifiziert werden. Dadurch wird festgestellt, dass dem PKW 404 auf demselben Fahrstreifen ein anderes Fahrzeug vorausfährt, nämlich der PKW 409. Außerdem wird festgestellt, dass dem PKW 404 auf einem Fahrstreifen, der zwischen dem von dem PKW 404 befahrenen Fahrstreifen und einer möglichen Abzweigung angeordnet ist, ein weiteres Fahrzeug vorausfährt, wobei es sich um den LKW 403 handelt.

Ferner werden durch die Recheneinheit mehrere Abstandswerte und diesen jeweils zugeordnete Richtungswerte von der Abstandsmesseinheit abgerufen. Jeder der Abstandswerte repräsentiert einen aktuellen Abstand zwischen dem PKW 404 und einem vorausfahrenden Fahrzeug, das heißt dem LKW 403 oder dem PKW 409. Jeder der Richtungswerte repräsentiert die Richtung der jeweiligen Abstandsmessung, das heißt eine Richtung, in welcher der LKW 403 oder der PKW 409 vor dem PKW 404 angeordnet ist. Insbesondere repräsentiert jeder der Richtungswerte einen Winkel der jeweiligen Abstandsmessung bezüglich der Längsachse 411 des PKWs 404. Die erhaltenen Abstands- und Richtungswerte bilden ein Abstandsprofil.

Einige der Abstands- und Richtungswerte werden mittels der Recheneinheit den vorausfahrenden Fahrzeugen zugeordnet. Dazu wird ein Abgleich zwischen den Abstands- und Richtungswerten und den auf dem Bild identifizierten vorausfahrenden Fahrzeugen vorgenommen. Auf diese Weise wird ein erster Abstand 405 ermittelt, in dem der LKW 403 dem PKW 404 vorausfährt. Ferner wird ein zweiter Abstand 410 ermittelt, in dem der PKW 409 dem PKW 404 vorausfährt. Ein danach vorgenommener Vergleich ergibt, dass der erste Abstand 405 kleiner als der Referenzabstand ist.

Somit wird festgestellt, dass dem PKW 404 in einem Fahrstreifen, der zwischen dem von dem Fahrzeug befahrenen Fahrstreifen und einer möglichen Abzweigung angeordnet ist, ein anderes Fahrzeug in einem Abstand vorausfährt, der kleiner als der Referenzabstand ist. Daher wird angenommen, dass der Fahrzeugführer des PKWs 404 beabsichtigt, das vorausfahrende Fahrzeug zu überholen. Wegen der Überholabsicht des Fahrzeugführers werden die folgenden Verfahrensschritte ausgeführt. Andernfalls würde das Verfahren an dieser Stelle abgebrochen, könnte aber später, beispielsweise nach einer vorgegebenen Zeitdauer, erneut gestartet werden.

Bei einem zweiten Verfahrensschritt wird mittels der Recheneinheit eine erste Streckenlänge 407 zwischen dem PKW 404 und der Abzweigung 402, in die der PKW 404 voraussichtlich einfahren wird, bestimmt. Dabei wird in der gleichen Weise wie bei der Bestimmung der Streckenlänge 207 vorgegangen, welche bezugnehmend auf Figur 2 beschrieben wurde.

Bei einem dritten Verfahrensschritt wird mittels der Recheneinheit eine zweite Streckenlänge 408 bestimmt, welche für den Überholvorgang und ein sicheres Einfahren des PKWs 404 in die Autobahnausfahrt 402 benötigt wird.

Dazu werden bei einem ersten Teilschritt die aktuelle Geschwindigkeit des PKWs 404, der aktuelle Abstand 405 zwischen dem PKW 404 und dem LKW 403 und die aktuelle Geschwindigkeit des LKWs 403 bestimmt. Zusätzlich werden der aktuelle Abstand 410 zwischen dem PKW 404 und dem PKW 409 und die aktuelle Geschwindigkeit des PKWs 409 bestimmt. Dabei wird in der gleichen Weise wie beim Bestimmen der aktuellen Geschwindigkeit des PKWs 204, des aktuellen Abstands zwischen dem PKW 204 und dem LKW 203, und der aktuellen Geschwindigkeit des LKWs 203 vorgegangen, das bezugnehmend auf Figur 2 beschrieben wurde.

Bei einem zweiten Teilschritt wird mittels der Recheneinheit die Fahrzeuglänge des LKWs 403 geschätzt. Dabei wird in der gleichen Weise wie beim Bestimmen der Fahrzeuglänge des LKWs 203 vorgegangen, das bezugnehmend auf Figur 2 beschrieben wurde.

Bei einem dritten Teilschritt werden die Daten typischer straßenspezifischer Beschleunigungs- und Bremsvorgänge des PKWs 404 bereitgestellt. Dazu wird mittels der Recheneinheit unter Verwendung der Position des PKWs 404 und der Landkartendaten die Straßenklasse der Straße ermittelt, auf der sich der PKW 404 befindet. Dabei wird festgestellt, dass sich der PKW 404 auf einer Autobahn befindet. Daher werden mittels der Recheneinheit aus dem in der Fahrzeugdatenbank abgelegten Geschwindigkeitsprofil diejenigen Daten typischer Beschleunigungs- oder Bremsvorgänge des PKWs 404 ausgewählt, welche der Straßenklasse "Autobahn" zugeordnet sind.

Bei einem vierten Teilschritt werden mittels der Recheneinheit aus der Landkartendatenbank die auf der Autobahnausfahrt 402 und auf dem Abschnitt der Richtungsfahrbahn 401 zwischen dem PKW 404 und der Autobahnausfahrt 402 geltenden Geschwindigkeitsbegrenzungen ermittelt.

Bei einem fünften Teilschritt wird die zweite Streckenlänge 408 unter Verwendung folgender Eingangsgrößen berechnet:
a) aktuelle Geschwindigkeit des PKWs 404 (bereitgestellt beim ersten Teilschritt),
b) aktueller Abstand zwischen dem PKW 404 und dem LKW 403 (bereitgestellt beim ersten Teilschritt),
c) aktuelle Geschwindigkeit des LKWs 403 (bereitgestellt beim ersten Teilschritt),
d) geschätzte Fahrzeuglänge des LKWs 403 (bereitgestellt beim zweiten Teilschritt),
e) Geschwindigkeitsbegrenzungen auf der Autobahnausfahrt 402 und auf dem Abschnitt der Richtungsfahrbahn 401 zwischen dem PKW 404 und der Autobahnausfahrt 402 (bereitgestellt beim vierten Teilschritt),
f) Daten typischer Beschleunigungs- und Bremsvorgänge des PKWs 404 (bereitgestellt beim dritten Teilschritt),
g) aktueller Abstand zwischen dem PKW 404 und dem PKW 409 (bereitgestellt beim ersten Teilschritt), und
h) aktuelle Geschwindigkeit des PKWs 409 (bereitgestellt beim ersten Teilschritt).

Die verwendeten Eingangsgrößen a) bis e) entsprechen den beim Berechnen der zweiten Streckenlänge 208 (vgl. Figur 2) verwendeten Eingangsgrößen a) bis e). Anstelle der beim Berechnen der zweiten Streckenlänge 208 eingesetzten Daten zu Beschleunigungsvermögen, Verzögerungsvermögen, Höchstgeschwindigkeit und Fahrzeuglänge des PKWs werden hier Daten typischer Beschleunigungs- und Bremsvorgänge des PKWs 404 aus dem dynamisch aktualisierten Geschwindigkeitsprofil als Eingangsgröße f) verwendet. Zusätzlich fließen die Eingangsgrößen g) und h), welche die Bewegung des PKWs 409 charakterisieren, in die Berechnung ein, da der vorausfahrende PKW 409 möglicherweise die Überholgeschwindigkeit des PKWs 404 begrenzt.

Bei einem vierten Verfahrensschritt werden mittels der Recheneinheit die erste Streckenlänge 407 und die zweite Streckenlänge 408 miteinander verglichen. Im vorliegenden Fall ergibt der Vergleich, dass die erste Streckenlänge 407 kleiner als die zweite Streckenlänge 408 ist. Deshalb wird bei einem fünften Verfahrensschritt eine Warnung vor dem Überholvorgang an den Fahrzeugführer des Fahrzeugs ausgegeben. Dabei wird in der gleichen Weise wie beim Ausgeben der Warnung vorgegangen, das bezugnehmend auf Figur 2 beschrieben wurde.

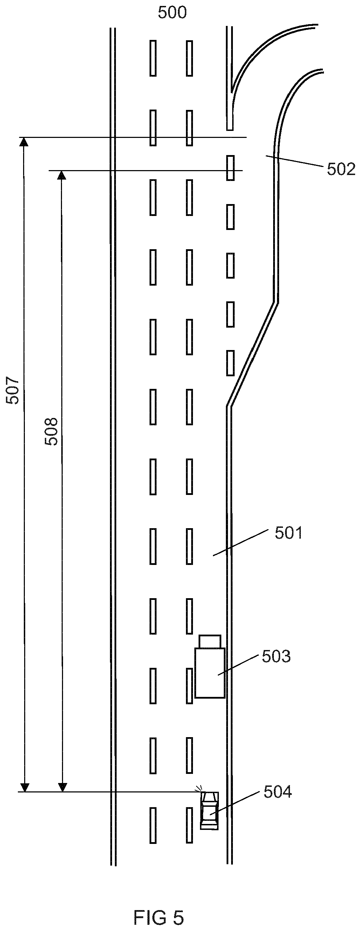

**Figur 5** zeigt eine Draufsicht auf einen Autobahnabschnitt 500 zum Erläutern eines vereinfachten veranschaulichenden Beispiels des Verfahrens, wobei auch auf Figur 1 Bezug genommen wird.

Der Autobahnabschnitt 500 weist eine dreistreifige Richtungsfahrbahn 501 mit einer Autobahnausfahrt 502 auf. Der rechte Fahrstreifen der Richtungsfahrbahn 501 wird von einem LKW 503 befahren, dem ein PKW 504 auf demselben Fahrstreifen folgt. An Bord des PKWs 504 befindet sich eine Navigationseinrichtung, deren Zielführung aktiviert ist, sodass der Fahrzeugführer des PKWs 504 mittels optischer und akustischer Fahranweisungen entlang einer Route geleitet wird, die unter anderem über die Autobahnausfahrt 502 führt.

Der PKW 504 ist außerdem mit einer Warneinrichtung ausgestattet, die der in Figur 1 gezeigten Warneinrichtung gleicht, im Unterschied zu dieser aber über keine Fremdfahrzeugdatenbank, keine Bildaufnahmeeinheit und keine Abstandsmesseinheit verfügt. Außerdem weist die Fahrzeugdatenbank des PKWs 504 die oben erläuterten Geschwindigkeitsbereiche auf, denen jeweils ein Standardüberholweg zugeordnet ist.

Bei einem ersten Verfahrensschritt wird geprüft, ob eine Absicht des Fahrzeugführers besteht, einen Überholvorgang auszuführen.

Hierfür wird mittels der Recheneinheit der Zustand eines Fahrtrichtungsanzeigers des PKWs 504, der zum Ankündigen eines Überholvorgangs vorgesehen ist, von der Fahrtrichtungsanzeigeeinheit abgerufen. Das heißt, es wird geprüft, ob solch ein Fahrtrichtungsanzeiger des PKWs 504 aktiviert ist. Im vorliegenden Fall wird festgestellt, dass solch ein Blinker aktiviert ist. Daher wird angenommen, dass der Fahrzeugführer des PKWs 504 beabsichtigt, ein vorausfahrendes Fahrzeug zu überholen. Wegen der Überholabsicht des Fahrzeugführers werden die folgenden Verfahrensschritte ausgeführt. Andernfalls würde das Verfahren an dieser Stelle abgebrochen, könnte aber später, beispielsweise nach einer vorgegebenen Zeitdauer, erneut gestartet werden.

Bei einem zweiten Verfahrensschritt wird mittels der Recheneinheit eine erste Streckenlänge 507 zwischen dem PKW 504 und der Abzweigung 502, in die der PKW 504 voraussichtlich einfahren wird, bestimmt. Dabei wird in der gleichen Weise wie bei der Bestimmung der Streckenlänge 207 vorgegangen, welche bezugnehmend auf Figur 2 beschrieben wurde.

Bei einem dritten Verfahrensschritt wird mittels der Recheneinheit eine zweite Streckenlänge 508 bestimmt, welche für den Überholvorgang und ein sicheres Einfahren des PKWs 504 in die Ausfahrt 502 benötigt wird.

Dazu wird bei einem ersten Teilschritt eine aktuelle Geschwindigkeit des PKWs 504 bestimmt, indem die Geschwindigkeit von der Geschwindigkeitsmesseinheit des PKWs 504 abgerufen wird.

Bei einem zweiten Teilschritt wird mittels der Recheneinheit aus der Fahrzeugdatenbank derjenige Standardüberholweg ausgewählt, welcher dem Geschwindigkeitsbereich zugeordnet ist, in dem die aktuelle Geschwindigkeit des PKWs 504 liegt. Der ausgewählte Standardüberholweg wird als zweite Streckenlänge 508 bereitgestellt.

Bei einem vierten Verfahrensschritt werden mittels der Recheneinheit die erste Streckenlänge 507 und die zweite Streckenlänge 508 miteinander verglichen. Im vorliegenden Fall ergibt der Vergleich, dass die erste Streckenlänge 507 größer als die zweite Streckenlänge 508 ist.

Deshalb wird keine Warnung vor dem Überholvorgang an den Fahrzeugführer ausgegeben. Wenn dagegen der Vergleich ergeben hätte, dass die erste Streckenlänge kleiner als die zweite Streckenlänge ist, würde bei einem fünften Verfahrensschritt eine Warnung vor dem Überholvorgang an den Fahrzeugführer des Fahrzeugs ausgegeben.

## Patentansprüche

1. Verfahren zum Ausgeben einer Warnung vor einem Überholvorgang an einen Fahrzeugführer eines Fahrzeugs (304) mit einer Warneinrichtung, welche eine Recheneinheit und eine Warneinheit aufweist, mit den folgenden Schritten:
Feststellen, ob eine Absicht des Fahrzeugführers besteht, einen Überholvorgang auszuführen, unter Verwendung der Recheneinheit und, wenn eine Absicht des Fahrzeugführers besteht, einen Überholvorgang auszuführen,
Bestimmen einer ersten Streckenlänge (307) zwischen dem Fahrzeug (304) und einer Abzweigung (302), in die das Fahrzeug (304) einfahren soll, unter Verwendung der Recheneinheit,
Bestimmen einer für den Überholvorgang und ein sicheres Einfahren des Fahrzeugs (304) in die Abzweigung (302) benötigten zweiten Streckenlänge (308), unter Verwendung der Recheneinheit,
Vergleichen der ersten Streckenlänge (307) mit der zweiten Streckenlänge (308) unter Verwendung der Recheneinheit und, wenn die erste Streckenlänge (307) kleiner als die zweite Streckenlänge (308) ist,
Ausgeben der Warnung unter Verwendung der Warneinheit, wobei
beim Feststellen der Absicht des Fahrzeugführers, einen Überholvorgang auszuführen, geprüft wird, ob dem Fahrzeug (304) auf einem Fahrstreifen, der zwischen dem von dem Fahrzeug (304) befahrenen Fahrstreifen und der Abzweigung (302) angeordnet ist, ein anderes Fahrzeug (303) in einem Abstand (305) vorausfährt, der kleiner als ein vorgegebener Referenzabstand ist, und in diesem Fall angenommen wird, dass eine Absicht des Fahrzeugführers besteht, einen Überholvorgang auszuführen.

2. Verfahren gemäß Anspruch 1,
bei dem beim Feststellen der Absicht des Fahrzeugführers, einen Überholvorgang auszuführen, geprüft wird, ob dem Fahrzeug (204) auf einem von dem Fahrzeug (204) befahrenen Fahrstreifen ein anderes Fahrzeug (203) in einem Abstand (205) vorausfährt, der kleiner als ein vorgegebener Referenzabstand ist.

3. Verfahren gemäß Anspruch 1 oder 2,
bei dem beim Feststellen der Absicht des Fahrzeugführers, einen Überholvorgang auszuführen, geprüft wird, ob ein zum Ankündigen eines Überholvorgangs vorgesehener Fahrtrichtungsanzeiger des Fahrzeugs (204) aktiviert ist.

4. Verfahren gemäß einem der vorhergehenden Ansprüche,
bei dem ein Abstandsprofil erstellt wird, welches richtungsbezogene Abstandswerte zwischen dem Fahrzeug (404) und anderen Fahrzeugen (403, 409) aufweist, welche dem Fahrzeug (404) vorausfahren.

5. Verfahren gemäß einem der vorhergehenden Ansprüche,
bei dem, wenn keine Zielführung einer Navigationseinrichtung des Fahrzeugs (204) aktiviert ist, die erste Streckenlänge (207) unter Berücksichtigung einer Route bestimmt wird, welche anhand einer aktuellen Position des Fahrzeugs (204) aus einer Mehrzahl von Routen ausgewählt wurde.

6. Verfahren gemäß einem der vorhergehenden Ansprüche,
bei dem beim Bestimmen der zweiten Streckenlänge ein Geschwindigkeitsprofil verwendet wird, welches typische Beschleunigungsvorgänge oder Bremsvorgänge des Fahrzeugs (204) repräsentiert, die jeweils einer Straßenklasse oder einer erlaubten Höchstgeschwindigkeit zugeordnet sind.

7. Verfahren gemäß Anspruch 6,
bei dem das Geschwindigkeitsprofil während des Betriebs des Fahrzeugs (204) aktualisiert wird.

8. Verfahren gemäß einem der vorhergehenden Ansprüche,
bei dem beim Bestimmen der zweiten Streckenlänge (208) eine Fahrzeugkontur eines dem Fahrzeug (204) vorausfahrenden Fahrzeugs (203) aus einem Bild extrahiert wird, die Fahrzeugkontur bezüglich ihrer Größe normiert wird, eine Referenzfahrzeugkontur anhand ihrer Ähnlichkeit mit der normierten Fahrzeugkontur aus einer Mehrzahl von Referenzfahrzeugkonturen ausgewählt wird und eine der Referenzfahrzeugkontur zugeordnete Standardfahrzeuglänge als Länge des vorausfahrenden Fahrzeugs (203) bereitgestellt wird.

9. Verfahren gemäß einem der vorhergehenden Ansprüche,
bei dem beim Bestimmen der zweiten Streckenlänge (208) ein Geschwindigkeitswert des Fahrzeugs (204) bereitgestellt wird, mehrere Bilder eines dem Fahrzeug (204) vorausfahrenden Fahrzeugs (203) ausgewertet werden, sodass Bildänderungsinformationen bereitgestellt werden, und eine Geschwindigkeit des vorausfahrenden Fahrzeugs (203) unter Berücksichtigung des Geschwindigkeitswerts des Fahrzeugs (204) und der Bildänderungsinformationen berechnet wird.

10. Verfahren gemäß einem der vorhergehenden Ansprüche,
bei dem beim Bestimmen der zweiten Streckenlänge (208) mehrere Geschwindigkeitswerte des Fahrzeugs (204) bereitgestellt werden, mehrere Bilder eines dem Fahrzeug (204) vorausfahrenden Fahrzeugs (203) ausgewertet werden, sodass Bildänderungsinformationen bereitgestellt werden, und eine Beschleunigung des vorausfahrenden Fahrzeugs (203) unter Berücksichtigung der Geschwindigkeitswerte des Fahrzeugs (204) und der Bildänderungsinformationen berechnet wird.

11. Verfahren gemäß einem der vorhergehenden Ansprüche,
bei dem beim Bestimmen der zweiten Streckenlänge (208) geprüft wird, ob ein Fahrtrichtungsanzeiger eines dem Fahrzeug (204) vorausfahrenden Fahrzeugs (203) aktiviert ist, welcher zum Ankündigen eines Überholvorgangs vorgesehen ist, und eine Verlängerung der zweiten Streckenlänge (208) angenommen wird, wenn festgestellt wird, dass ein derartiger Fahrtrichtungsanzeiger aktiviert ist.

12. Verfahren gemäß einem der vorhergehenden Ansprüche,
bei dem beim Bestimmen der zweiten Streckenlänge (408) ein Abstand zwischen dem Fahrzeug (404) und einem ersten dem Fahrzeug (404) vorausfahrenden Fahrzeug (403), ein Abstand zwischen dem Fahrzeug (404) und einem zweiten dem Fahrzeug (404) vorausfahrenden Fahrzeug (409), eine Geschwindigkeit des ersten vorausfahrenden Fahrzeugs (403) und eine Geschwindigkeit des zweiten vorausfahrenden Fahrzeugs (409) berücksichtigt werden, wobei das erste vorausfahrende Fahrzeug (403) und das zweite vorausfahrende Fahrzeug (409) unterschiedliche Fahrstreifen einer Richtungsfahrbahn (401) befahren.

13. Verfahren gemäß einem der Ansprüche 1 bis 5,
bei dem beim Bestimmen der zweiten Streckenlänge (508) ein Geschwindigkeitsbereich, in dem eine Geschwindigkeit des Fahrzeugs (504) liegt, aus einer Mehrzahl von Geschwindigkeitsbereichen ausgewählt wird und ein dem ausgewählten Geschwindigkeitsbereich zugeordneter Standardüberholweg als die zweite Streckenlänge (508) bereitgestellt wird.

14. Warneinrichtung zum Ausgeben einer Warnung vor einem Überholvorgang an einen Fahrzeugführer eines Fahrzeugs (304), wobei die Warneinrichtung aufweist:
eine Recheneinheit, welche zum Feststellen, ob eine Absicht des Fahrzeugführers besteht, einen Überholvorgang auszuführen, und, wenn eine Absicht des Fahrzeugführers besteht, einen Überholvorgang auszuführen, Bestimmen einer ersten Streckenlänge (307) zwischen dem Fahrzeug (304) und einer Abzweigung (302), in die das Fahrzeug (304) einfahren soll, Bestimmen einer für den Überholvorgang und ein sicheres Einfahren des Fahrzeugs (304) in die Abzweigung (302) benötigten zweiten Streckenlänge (308) und Vergleichen der ersten Streckenlänge (307) mit der zweiten Streckenlänge (308) eingerichtet ist, und
eine Warneinheit, welche zum Ausgeben der Warnung, wenn die erste Streckenlänge (307) kleiner als die zweite Streckenlänge (308) ist, eingerichtet ist, wobei
beim Feststellen der Absicht des Fahrzeugführers, einen Überholvorgang auszuführen, geprüft wird, ob dem Fahrzeug (304) auf einem Fahrstreifen, der zwischen dem von dem Fahrzeug (304) befahrenen Fahrstreifen und der Abzweigung (302) angeordnet ist, ein anderes Fahrzeug (303) in einem Abstand (305) vorausfährt, der kleiner als ein vorgegebener Referenzabstand ist, und in diesem Fall angenommen wird, dass eine Absicht des Fahrzeugführers besteht, einen Überholvorgang auszuführen.

## Claims

1. Method for emitting a warning before an overtaking procedure to a driver of a vehicle (304) with a warning device which comprises a computing unit and a warning unit, with the following steps:
determining if there is an intention of the driver to perform an overtaking procedure by using the computing unit, and, if there is an intention of the driver to perform an overtaking procedure,
determining a first track length (307) between the vehicle (304) and a junction (302) into which the vehicle (304) shall drive by using the computing unit,
determining a second track length (308) needed for the overtaking procedure and a secure driving of the vehicle (304) into the junction (302) by using the computing unit,
comparing the first track length (307) with the second track length (308) by using the computing unit, and, if the first track length (307) is smaller than the second track length (308),
emitting the warning by using the warning unit,
whereby
by determining the intention of the driver to perform an overtaking procedure it is checked if on a lane disposed between the lane driven by the vehicle (304) and the junction (302) another vehicle (303) drives ahead of the vehicle (304) within a distance (305) which is smaller than a predetermined reference distance and, in this case, it is assumed that there is an intention of the driver to perform an overtaking procedure.

2. Method according to claim 1,
whereby by determining the intention of the driver to perform an overtaking procedure it is checked if on lane driven by the vehicle (204) another vehicle (203) drives ahead of the vehicle (204) within a distance (205) which is smaller than a predetermined reference distance.

3. Method according to claim 1 or 2,
whereby by determining the intention of the driver to perform an overtaking procedure it is checked if a direction indicator of the vehicle (204) designed for signalising an overtaking procedure is activated.

4. Method according to one of the preceding claims,
whereby a distance profile is established which comprises direction oriented distance values between the vehicle (404) and other vehicles (403, 409) which drive ahead of the vehicle (404).

5. Method according to one of the preceding claims,
whereby if no route guidance of a navigation device of the vehicle (204) is activated the first track length (207) is determined in consideration of a route which was selected from a plurality of routes on the basis of a current position of the vehicle (204).

6. Method according to one of the preceding claims,
whereby by determining the second track length a speed profile is used which represents typical acceleration events or brake applications of the vehicle (204) which are each assigned to a road class or an allowed maximum speed.

7. Method according to claim,
whereby the speed profile is updated during the operation of the vehicle (204).

8. Method according to one of the preceding claims,
whereby by determining the second track length (208) a vehicle contour of a vehicle (203) driving ahead of the vehicle (204) is extracted from an image, the vehicle contour is normalised with respect to its size, a reference vehicle contour is selected on the basis of its similarity to the normalised vehicle contour from a plurality of reference vehicle contours, and a standard vehicle length assigned to the reference vehicle contour is provided as length of the vehicle (203) driving ahead.

9. Method according to one of the preceding claims,
whereby by determining the second track length (208) a speed value of the vehicle (204) is provided, several images of a vehicle (203) driving ahead of the vehicle (204) are evaluated so that image modification information is provided, and a speed of the vehicle (203) driving ahead is computed in consideration of the speed value of the vehicle (204) and the image modification information.

10. Method according to one of the preceding claims,
whereby by determining the second track length (208) several speed values of the vehicle (204) are provided, several images of a vehicle (203) driving ahead of the vehicle (204) are evaluated so that image modification information is provided, and an acceleration of the vehicle (203) driving ahead is computed in consideration of the speed values of the vehicle (204) and the image modification information.

11. Method according to one of the preceding claims,
whereby by determining the second track length (208) it is checked if a direction indicator of a vehicle (203) driving ahead of the vehicle (204) designed for signalizing an overtaking procedure is activated, and an elongation of the second track length (208) is assumed if it is determined that such a direction indicator is activated.

12. Method according to one of the preceding claims,
whereby by determining the second track length (408) a distance between the vehicle (404) and a first vehicle (403) driving ahead of the vehicle (404), a distance between the vehicle (404) and a second vehicle (409) driving ahead of the vehicle (404), a speed of the first vehicle (403) driving ahead, and a speed of the second vehicle (403) driving ahead are considered, whereby the first vehicle (403) driving ahead and the second vehicle (409) driving ahead drive on different lanes of a carriageway (401).

13. Method according to one of the claims 1 to 5,
whereby by determining the second track length (508) a speed range in which a speed of the vehicle (504) lies is selected from a plurality of speed ranges and a standard overtaking track length assigned to the selected speed range is provided as the second track length (508).

14. Warning device for emitting a warning before an overtaking procedure to a driver of a vehicle (304), wherein the warning device comprises:
a computing unit arranged for determining if there is an intention of the driver to perform an overtaking procedure, and, if there is an intention of the driver to perform an overtaking procedure, determining a first track length (307) between the vehicle (304) and a junction (302) into which the vehicle (304) shall drive, determining a second track length (308) needed for the overtaking procedure and a secure driving of the vehicle (304) into the junction (302), and comparing the first track length (307) with the second track length (308), and
a warning unit arranged for emitting the warning if the first track length (307) is smaller than the second track length (308),
whereby
by determining the intention of the driver to perform an overtaking procedure it is checked if on a lane disposed between the lane driven by the vehicle (304) and the junction (302) another vehicle (303) drives ahead of the vehicle (304) within a distance (305) which is smaller than a predetermined reference distance and, in this case, it is assumed that there is an intention of the driver to perform an overtaking procedure.

## Revendications

1. Procédé d'émission d'une alarme avant une manoeuvre de dépassement à l'attention du conducteur d'un véhicule (304) avec un dispositif avertisseur comportant une unité de calcul et une unité d'alarme, le procédé étant constitué des étapes suivantes :
déterminer si le conducteur du véhicule a l'intention d'effectuer une manoeuvre de dépassement, en utilisant l'unité de calcul et, s'il y a une intention du conducteur du véhicule d'effectuer une manoeuvre de dépassement,
déterminer une première longueur de tronçon (307) entre le véhicule (304) et une bifurcation (302) à laquelle le véhicule (304) doit bifurquer, en utilisant l'unité de calcul,
déterminer une deuxième longueur de tronçon (308) requise pour permettre au véhicule (304) d'effectuer la manoeuvre de dépassement et de bifurquer en toute sécurité à la bifurcation (302), en utilisant l'unité de calcul,
comparer la première longueur de tronçon (307) et la deuxième longueur de tronçon (308) en utilisant l'unité de calcul et, si la première longueur de tronçon (307) est plus petite que la deuxième longueur de tronçon (308),
émettre une alarme en utilisant l'unité d'alarme,
un contrôle étant effectué pour déterminer l'intention du conducteur du véhicule d'effectuer une manoeuvre de dépassement, consistant à vérifier si, sur une voie située entre la voie sur laquelle circule le véhicule (304) et la bifurcation (302), le véhicule (304) est précédé d'un autre véhicule (303) à une distance (305) inférieure à une distance de référence spécifiée, dans quel cas le conducteur du véhicule est supposé avoir l'intention d'effectuer une manoeuvre de dépassement.

2. Procédé selon la revendication 1,
**caractérisé en ce qu'**un contrôle, consistant à vérifier si, sur une voie sur laquelle circule le véhicule (204), le véhicule (204) est précédé d'un autre véhicule (203) à une distance (205) inférieure à une distance de référence spécifiée, est effectué pour déterminer l'intention du conducteur du véhicule d'effectuer une manoeuvre de dépassement.

3. Procédé selon les revendications 1 ou 2,
**caractérisé en ce qu'**un contrôle, consistant à vérifier si un indicateur de changement de direction prévu sur le véhicule (204) pour annoncer une manoeuvre de dépassement est activé, est effectué pour déterminer l'intention du conducteur du véhicule d'effectuer une manoeuvre de dépassement.

4. Procédé selon l'une des revendications précédentes,
**caractérisé en ce qu'**un profil de distance comprenant des valeurs de distance spécifiques à la direction entre le véhicule (404) et d'autres véhicules (403, 409) précédant le véhicule (404) est établi.

5. Procédé selon l'une des revendications précédentes,
**caractérisé en ce que**, si aucune assistance d'un dispositif de navigation du véhicule (204) n'est activé, la première longueur de tronçon (207) est déterminée en fonction d'un itinéraire choisi parmi une multitude d'itinéraires en fonction d'une position actuelle du véhicule (204).

6. Procédé selon l'une des revendications précédentes,
**caractérisé en ce qu'**un profil de vitesse représentant des manoeuvres d'accélération ou de freinage typiques du véhicule (204), attribuées à une catégorie de routes ou à une limite de vitesse autorisée, est utilisé pour déterminer la deuxième longueur de tronçon.

7. Procédé selon la revendication 6,
**caractérisé en ce que** le profil de vitesse est mis à jour pendant l'utilisation du véhicule (204).

8. Procédé selon l'une des revendications précédentes,
**caractérisé en ce que**, pour déterminer la deuxième longueur de tronçon (208), un contour d'un véhicule (203) précédant le véhicule (204) est extrait d'une image, que la taille du contour du véhicule est normalisée, qu'un contour de véhicule de référence est choisi parmi une multitude de contours de véhicule de référence en raison de sa similitude avec le contour de véhicule normalisé et qu'une longueur de véhicule standard affectée au contour de véhicule de référence est fournie comme longueur du véhicule précédent (203).

9. Procédé selon l'une des revendications précédentes,
**caractérisé en ce que**, pour déterminer la deuxième longueur de tronçon (208), une valeur de vitesse du véhicule (204) est fournie, que plusieurs images d'un véhicule (203) précédant le véhicule (204) sont exploitées de sorte que des informations de modification d'image sont fournies, et qu'une vitesse du véhicule précédent (203) est calculée en fonction de la valeur de vitesse du véhicule (204) et des informations de modification d'image.

10. Procédé selon l'une des revendications précédentes,
**caractérisé en ce que**, pour déterminer la deuxième longueur de tronçon (208), plusieurs valeurs de vitesse du véhicule (204) sont fournies, que plusieurs images d'un véhicule (203) précédant le véhicule (204) sont exploitées de sorte que des informations de modification d'image sont fournies, et qu'une accélération du véhicule précédent (203) est calculée en fonction des valeurs de vitesse du véhicule (204) et des informations de modification d'image.

11. Procédé selon l'une des revendications précédentes,
**caractérisé en ce que**, pour déterminer la deuxième longueur de tronçon (208), un contrôle est effectué, consistant à vérifier si un indicateur de changement de direction prévu sur un véhicule (203) précédant le véhicule (204) pour annoncer une manoeuvre de dépassement est activé, et que, si l'activation d'un tel indicateur de changement de direction est constatée, une augmentation de la deuxième longueur de tronçon (208) est supposée.

12. Procédé selon l'une des revendications précédentes,
**caractérisé en ce que**, pour déterminer la deuxième longueur de tronçon (408), une distance entre le véhicule (404) et un premier véhicule (403) précédant le véhicule (404), une distance entre le véhicule (404) et un deuxième véhicule (409) précédant le véhicule (404), une vitesse du premier véhicule précédent (403) et une vitesse du deuxième véhicule précédent (409) sont prises en compte, le premier véhicule précédent (403) et le deuxième véhicule précédent (409) circulant sur des voies différentes du même côté de la route (401).

13. Procédé selon l'une des revendications 1 à 5,
**caractérisé en ce que**, pour déterminer la deuxième longueur de tronçon (508), une plage de vitesse dans laquelle se situe une vitesse du véhicule (504) est choisie parmi une multitude de plages de vitesse et qu'une distance de dépassement standard affectée à la plage de vitesse choisie est fournie comme deuxième longueur de tronçon (508).

14. Dispositif avertisseur servant à émettre une alarme avant une manoeuvre de dépassement à l'attention d'un conducteur d'un véhicule (304), le dispositif avertisseur comprenant :
une unité de calcul configurée pour déterminer s'il existe une intention du conducteur du véhicule d'effectuer une manoeuvre de dépassement et, s'il y une intention du conducteur du véhicule d'effectuer une manoeuvre de dépassement, déterminer une première longueur de tronçon (307) entre le véhicule (304) et une bifurcation (302), à laquelle le véhicule (304) doit bifurquer, déterminer une deuxième longueur de tronçon (308) requise pour permettre au véhicule (304) d'effectuer la manoeuvre de dépassement et de bifurquer en toute sécurité à la bifurcation (302), et comparer la première longueur de tronçon (307) et la deuxième longueur de tronçon (308), et
une unité d'alarme configurée pour émettre une alarme si la première longueur de tronçon (307) est plus petite que la deuxième longueur de tronçon (308),
un contrôle étant effectué pour déterminer l'intention du conducteur du véhicule d'effectuer une manoeuvre de dépassement, consistant à vérifier si, sur une voie située entre la voie sur laquelle circule le véhicule (304) et la bifurcation (302), le véhicule (304) est précédé d'un autre véhicule (303) à une distance (305) inférieure à une distance de référence spécifiée, dans quel cas le conducteur du véhicule est supposé avoir l'intention d'effectuer une manoeuvre de dépassement.
